# FASCICULE DE BREVET EUROPEEN

(11) **EP 1 237 739 B1**
(45) Date de publication et mention de la délivrance du brevet: **29.06.2005**
(21) Numéro de dépôt: 00979654.1
(22) Date de dépôt: 30.11.2000
(51) Int. Cl.: B60C 15/024, B60C 15/00, B60C 15/06, B60C 17/00

(54) **BOURRELET POUR PNEUMATIQUE A MOBILITE ETENDUE**
WULST FÜR NOTLAUFREIFEN
TYRE BEAD WITH EXTENDED MOBILITY

(30) Priorité: 03.12.1999 FR 9915367
(43) Date de publication de la demande: 11.09.2002
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: COSTA PEREIRA, Pedro, F-63000 Clermont-Ferrand (FR); GUERINON, Bernard, F-63100 Clermont-Ferrand (FR)
(74) Mandataire: Dequire, Philippe Jean-Marie Denis
(86) Numéro de dépôt international: PCT/EP2000/012061
(87) Numéro de publication internationale: WO 2001/040000

(56) Documents cités:
- EP-A- 0 582 196
- EP-A- 0 869 017
- EP-A- 0 922 592
- EP-B- 0 748 287
- WO-A-99/64225
- GB-A- 2 061 199

## Description

La présente invention concerne un pneumatique pour roue de véhicule dans lequel au moins un des bourrelets comporte un siège avec une génératrice dont l'extrémité axialement intérieure est sur un cercle de diamètre supérieur au diamètre du cercle sur lequel se trouve l'extrémité axialement extérieure. Ce type de conception est particulièrement adapté aux nouvelles générations de pneumatiques pouvant être utilisés, dans certaines limites, dans des conditions de faible pression, voire de pression nulle ou quasi-nulle, avec une élimination du risque de désolidarisation du pneu de la jante sur laquelle il est monté. Ce concept est souvent désigné par l'expression "mobilité étendue".

Depuis longtemps les fabricants de pneumatiques tentent de mettre au point un pneumatique ne créant aucune source de risque ou de danger potentiel lors d'un abaissement anormal, voire d'une perte totale de pression. Une des difficultés rencontrées concerne le roulage à plat ou à très faible pression. En effet, lors d'un roulage à très faible pression, voire à pression nulle avec des pneumatiques classiques, les bourrelets risquent fortement de se désolidariser du pourtour de la jante contre lequel ils étaient maintenus par la pression.

De nombreuses solutions ont été testées afin de pallier ces inconvénients. Souvent ces solutions engendrent des difficultés supplémentaires au niveau du montage et du démontage du pneu sur la jante.

Le document EP 0 582 196 présente un pneumatique comportant une bande de roulement prolongée par deux flancs et deux bourrelets ainsi qu'une carcasse ancrée dans les deux bourrelets à un renforcement annulaire.

La carcasse est constituée de fils disposés de façon adjacente, alignés circonférentiellement et en contact avec au moins une couche de gomme de liaison de très haut module d'élasticité dans la zone d'accrochage du bourrelet comprenant le renforcement annulaire.

Dans ce pneumatique, le renforcement annulaire de la zone d'accrochage du bourrelet est constitué de piles de fils circonférentiels avec interposition entre les fils de renforcement de la carcasse et ces piles d'une couche de gomme de liaison de très haut module d'élasticité.

Ce mode de réalisation est destiné aux pneumatiques de type classique, avec maintien des bourrelets contre le crochet de jante dû à la pression de gonflage du pneumatique. On retrouve dans ce type d'agencement une prédominance d'efforts de type latéral ou axial, induisant d'importantes forces de compression agissant sensiblement axialement depuis les parois vers le centre dudit bourrelet. Ces forces augmentent en fonction de la pression de gonflage. L'augmentation de la pression tend à faire glisser le bourrelet contre le crochet, radialement vers l'extérieur. Les efforts induits radialement vers l'intérieur, contre le siège de la jante , diminuent avec l'augmentation de la pression, ou avec toute augmentation de la tension de la structure de renfort de type carcasse.

On remarque par ailleurs que les piles de fils sont alignées dans un sens sensiblement parallèle à l'orientation du profil du crochet de jante contre lequel le bourrelet s'appuie. Le profil du bourrelet de ce type de pneumatique est relativement étroit et allongé; l'ancrage est réparti sur l'essentiel de la hauteur et de la largeur du bourrelet. Le passage de la carcasse dans le bourrelet est généralement sensiblement central par rapport aux parois dudit bourrelet. Par ailleurs, s'agissant d'un bourrelet relativement étroit sujet à des efforts à prédominance axiale, ni la pression de gonflage, ni la tension induite dans la carcasse ne permettent la génération d'important moments ou couples, tendant à faire pivoter ou tourner le bourrelet sur lui-même.

Avec un tel type de pneumatique, si la pression chute et que le roulage se poursuit, le maintien du pneumatique sur la jante n'est plus assuré, et dans la plupart des cas, il se produit un déjantage.

Le document EP 0 673 324 décrit un ensemble roulant comprenant au moins un pneumatique à armature de carcasse radiale ancrée dans chaque bourrelet et une jante de conformation particulière.

Cette jante comporte un premier siège avec une génératrice telle que l'extrémité axialement extérieure de ladite génératrice est distante de l'axe de rotation d'une longueur inférieure à la distance séparant son extrémité axialement intérieure et est délimitée axialement à l'extérieur par une saillie ou rebord de jante.

Le pneumatique comporte des sièges de bourrelets adaptés pour un montage sur cette jante. Le type d'interface pneumatique/jante proposé dans ce document présente de nombreux avantages par rapport aux solutions déjà connues, notamment au niveau de la facilité de montage/démontage tout en permettant d'effectuer un certain parcours malgré une chute de pression.

La présente invention vise notamment à proposer certains types d'architectures afin d'optimiser les qualités de l'ensemble proposé dans le document cité ci-haut.

Le document EP 0 748 287 qui montre un pneumatique selon le préambule des revendications 1 et 14, décrit une solution permettant une première optimisation de la technologie de base décrite dans le document EP 0 673 324 préalablement cité.

Il s'agit d'un pneumatique dont au moins un bourrelet a une structure permettant de modifier le serrage dudit bourrelet en fonction de la tension de l'armature de carcasse et notamment un renforcement de celui-ci lorsque la pression de gonflage s'accroît jusqu'à sa valeur nominale.

Le document propose ainsi l'utilisation d'un bourrelet avec ancrage de l'extrémité de la carcasse par retournement de celle-ci autour de la base de la tringle, par les cotés axialement et radialement intérieurs par rapport à la tringle. Le bourrelet comporte également, adjacent à la tringle et axialement à l'extérieur de celle-ci, un profilé de mélange caoutchouteux de dureté relativement élevée contre lequel la tringle peut venir exercer une force de compression lors d'un accroissement de tension de l'armature de carcasse. Cette force de compression crée un auto-serrage de la pointe du bourrelet sur la jante de montage. La tension de la carcasse entraîne donc un déplacement de la tringle vers l'extérieur, afin que cette dernière génère ladite force de compression. Dans une telle configuration, la présence d'une tringle de type classique et le retournement de la carcasse sous cette dernière sont présentés comme étant indispensables pour générer la force de compression. Ceci limite les possibilités d'envisager d'autres types d'agencement.

D'autre part, le document EP 0 922 592, décrit deux modes de réalisations avec ancrage de la carcasse par retournement de celle-ci axialement vers l'extérieur.

Le premier mode propose un ancrage de la carcasse dans le bourrelet par retournement radialement vers l'extérieur de l'extrémité de la carcasse.

Le retournement est entouré de part et d'autre par deux couches radialement superposées de fils métalliques disposés axialement côte à côte et couvrant sensiblement toute la portion axiale le long du siège du bourrelet. Les couches sont agencées de façon à être parallèles au siège. Les types de fils ainsi que les dimensions correspondantes sont très précises.

La seconde solution proposée dans ce document concerne des sièges de bourrelets avec des diamètres différents. L'arrimage de la carcasse s'effectue également de façon différente par rapport à la première solution. Tout d'abord, la carcasse se subdivise en deux portions radialement séparées au niveau du bourrelet.

Chaque portion est adjointe d'une couche de fils disposée radialement, chaque couche étant disposée radialement extérieurement contre chacune des portions de carcasse. La portion de carcasse radialement extérieure et la couche de fils radialement à l'intérieur sont séparées par un insert de type élastomère à dureté élevée prévu dans le bourrelet. Cet insert garnit axialement la portion centrale du bourrelet et remonte radialement vers l'extérieur et axialement vers l'intérieur, au-delà de la limite radiale de présence des fils métalliques.

Les deux exemples de solutions du document EP 0 922 592 comportent plusieurs inconvénients. Ainsi, l'arrimage de la carcasse proposé dans ce document nécessite la présence d'un retournement axialement vers l'extérieur de la portion d'extrémité de la carcasse. D'autre part, les couches de fils superposées sont disposées radialement près du siège du bourrelet, en bonne partie à une position radiale plus près de l'axe de rotation que la portion haute du rebord sur lequel le bourrelet appuie.

A moins d'utiliser des fils fortement extensibles, le montage/démontage du pneumatique est difficile à exécuter, dû à la position radiale défavorable des fils.

On remarque également que les piles sont orientées de façon sensiblement parallèle au profil du siège contre lequel le bourrelet appuie. Selon la seconde solution, la carcasse se subdivise en deux portions et un insert à dureté élevé est nécessaire pour séparer d'une part les couches de fils et d'autre part les deux portions de carcasse. L'ancrage de la carcasse n'est cependant pas réalisé dans l'insert. La forme de l'insert décrit est limitative.

La présente invention propose donc de pallier les différents inconvénients inhérents aux solutions exposées ci-dessus.

Pour ce faire, elle prévoit un pneumatique pour roue de véhicule, selon la revendication 1.

Une telle configuration permet un maintien optimal du bourrelet dans la jante, notamment au niveau de l'interface siège de la jante/siège du bourrelet. Les forces agissant sur la zone d'ancrage sont alors bien transmises vers la zone du siège du bourrelet. La continuité radiale permet de minimiser l'impact des forces de cisaillement agissant contre le bourrelet dans son ensemble.

La zone d'ancrage ne comporte pas de tringle, notamment de tringle de type traditionnel, comme par exemple une tringle multifilaire contre laquelle une nappe carcasse est retournée, cet appui ou contact ou coopération procurant le maintien de la carcasse.

Chacune des zones prises isolément de même que l'ensemble des zones forment en quelque sorte un bourrelet interne susceptible d'effectuer des mouvements relatifs, comme par exemple de type angulaire ou en rotation, par rapport à une autre zone, ou par rapport à un centre de pression CP virtuel, ou par rapport au siège de la jante, etc.

De manière avantageuse, la zone intermédiaire, assure une connexion mécanique entre ladite zone d'ancrage et ladite zone d'appui. La zone intermédiaire assure une continuité entre les deux autres zones, de façon à ce que les efforts mécaniques soient transmis de la zone d'ancrage vers la zone d'appui.

La zone intermédiaire est susceptible d'exercer un effort sensiblement radialement vers l'intérieur contre la portion axialement extérieure de la zone d'appui.

L'arrangement de fils circonférentiels contribue à l'effort de serrage circonférentiel du pneumatique contre la jante sur laquelle il est monté. Le niveau de serrage est déterminé de façon à assurer un bon compromis entre la facilité de montage/démontage et l'assurance d'un montage fiable et durable.

La zone intermédiaire, assure une connexion mécanique entre ladite zone d'ancrage et ladite zone d'appui. La zone d'ancrage et la zone intermédiaire peuvent être jumelées mécaniquement. Il en est de même pour la zone intermédiaire qui peut être jointe à la zone d'appui. Mais la zone d'ancrage est de préférence non directement jointe à la zone d'appui.

La structure de renfort des flancs et du sommet est avantageusement de type carcasse, ses propriétés mécaniques s'apparentant à celles des nappes carcasses de type connu. Par ailleurs, cette structure de renfort est avantageusement configurée sans séparation axiale au niveau du bourrelet. Ainsi, tous les fils de l'agencement circonférentiel occupent de préférence une position axiale sensiblement identique.

De préférence, la zone d'ancrage est radialement extérieure à la zone d'appui.

Le transfert d'efforts s'effectue de manière avantageuse par un moment de force.

La zone d'ancrage de la structure de renfort dans ledit bourrelet est avantageusement constituée au moins partiellement d'un mélange caoutchoutique à sensiblement haut module.

Ce module peut par exemple être sensiblement égal ou supérieur à 20 Mpa, et de préférence supérieur à 40 Mpa. La présence de ce type de mélange caoutchoutique contribue à l'ancrage de la structure de renfort de type carcasse. La structure de renfort est au moins partiellement en contact avec ce mélange, voire de préférence au moins partiellement noyée dans ledit mélange.

De préférence, ladite zone d'appui est sensiblement allongée. Elle se prolonge par exemple sensiblement le long du siège du bourrelet. Le transfert des efforts lors de la rotation de la zone basse de la portion axialement interne vers la portion axialement externe est ainsi possible, tout en conservant un appui contre au moins une portion du siège du bourrelet. Le transfert des efforts assure un auto-serrage de la pointe du bourrelet contre la jante.

La zone d'appui est de préférence sensiblement adjacente au siège de jante.

De manière préférentielle, la zone d'ancrage est disposée dans la portion du bourrelet sensiblement à proximité immédiate de la structure de renfort de type carcasse.

Elle peut donc se trouver soit d'un seul ou des deux côtés de la structure de renfort.

De manière préférentielle, la zone d'appui est sensiblement constituée d'un mélange de gomme à haut module.

L'écrasement de cette zone est ainsi limité et le contact avec le siège de la jante optimisé. Ce module peut par exemple être sensiblement égal ou supérieur à 20 Mpa, et de préférence supérieur à 40 Mpa.

La zone intermédiaire est de préférence sensiblement constituée d'un mélange de gomme à haut module. Elle peut avantageusement être entourée ou encerclée d'un ou plusieurs fils disposés autour de ladite zone, par exemple à 90°, de façon à contraindre ladite zone en compression.

Ce module peut par exemple être sensiblement égal ou supérieur à 20 Mpa, et de préférence supérieur à 40 Mpa.

Selon une autre variante avantageuse, le bourrelet comporte également une zone tampon écrasable disposée dans la portion radialement interne et axialement externe, susceptible d'appuyer contre un rebord de la jante.

La présence d'une telle zone favorise la rotation de la zone basse et permet également de sécuriser l'accrochage axial du bourrelet contre le rebord de jante. La présence d'une zone de gomme à haut module dans une portion radialement interne par rapport au rebord procure un bon maintien axial et évite que le bourrelet glisse axialement vers l'extérieur.

Selon une autre variante avantageuse, les portions de bourrelet généralement autour desdites zones d'ancrage, intermédiaire et d'appui sont généralement occupées par un matériau dont le module d'élasticité est plus faible que celui du matériau desdites zones d'ancrage, intermédiaire et d'appui.

Ces différentes zones disposent en effet d'une certaine mobilité relative par rapport au siège de jante sur lequel le bourrelet est monté. Cette mobilité s'exprime souvent par des déplacements de type angulaire ou rotationnel. Chacune des zones dispose également d'une certaine mobilité relative par rapport aux portions adjacentes du bourrelet constituées de mélanges caoutchoutiques à module plus faible et/ou par rapport aux autres zones voisines. Cette mobilité peut s'exprimer par exemple par des déplacements de type angulaire ou rotationnel.

De préférence, le module d'élasticité dudit mélange de gomme de haut module est supérieur à 20 Mpa et de préférence supérieur à 40 Mpa.

Selon un autre exemple avantageux, la zone d'appui et/ou la zone intermédiaire sont disposées et délimitées de façon à ce que lors d'une rotation sensiblement axialement extérieurement de la zone basse du pneumatique, aucune desdites zones n'exerce un effort contre le rebord ou le crochet de jante susceptible de provoquer un désassemblage du bourrelet du pneumatique.

Ainsi par exemple, la limite axialement extérieure desdites zones correspond sensiblement à la limite extérieure de la jante sur laquelle le pneumatique est susceptible d'être monté.

Selon une autre variante avantageuse, la zone intermédiaire comporte un arrangement sensiblement radial de fils circonférentiels. De façon similaire, la zone d'appui peut comporter un arrangement sensiblement radial de fils circonférentiels.

De manière avantageuse, le nombre de fils axialement intérieurs de la zone d'ancrage est au plus égal à 1.5 fois le nombre de fils axialement extérieurs.

Il s'agit ici des fils axialement intérieurs ou extérieurs par rapport à la structure de renfort de type carcasse.

De manière préférentielle, le bourrelet du pneumatique comporte une structure de renfort de type carcasse s'étendant sensiblement radialement depuis chacun des bourrelets, le long des flancs, vers la zone sommet, ledit bourrelet étant renforcé par un arrangement sensiblement radial de fils circonférentiels disposés en piles, une portion de la structure de renfort de type carcasse étant agencée à proximité immédiate d'au moins une portion d'une pile, l'espace entre ces portions étant généralement occupé par un mélange caoutchoutique à haut module d'élasticité.

Une zone d'interface est avantageusement constituée par une portion de la structure de renfort et au moins une pile, ladite zone étant généralement noyée dans un mélange de gomme à haut module. De manière avantageuse, ladite zone d'interface englobe généralement les piles et la portion de structure de renfort adjacente.

Un tel agencement, notamment au niveau du bourrelet, permet une très grande souplesse dans les délimitations des différentes zones comportant des mélanges de natures et/ou de caractéristiques différentes. Il en est de même pour les fils qui peuvent être configurées selon une multiplicité de configurations. En tenant compte de ces deux aspects, il est possible d'optimiser la conception et la fabrication des pneumatiques, en fonction du type de véhicule pour lequel le pneumatique est prévu et des contraintes d'utilisation associées. Il est également possible de prévoir des agencements plus appropriés facilitant certains types de fabrications automatisées par exemple avec assemblage sur noyau central et/ou sans utilisation de produits semi-finis. On peut ainsi concevoir un pneumatique pour un véhicule donné pouvant être fabriqué à un moindre coût.

L'ancrage de la structure de renfort dans le bourrelet est assuré, malgré l'absence d'une tringle de type classique autour de laquelle la carcasse est habituellement retournée afin de créer un lien fiable. Ce type d'architecture est également avantageux en raison de sa compacité et présente une facilité de montage/démontage. En outre, le traditionnel retournement de carcasse que l'on retrouve dans les bourrelets de types connus, comportant un siège avec une génératrice dont l'extrémité axialement intérieure est sur un cercle de diamètre supérieur au diamètre du cercle sur lequel se trouve l'extrémité axialement extérieure, peut être supprimé, sans pour autant sacrifier l'intégrité, la solidité ou l'endurance de l'assemblage. Cet aspect contribue à la simplification de la fabrication tout en offrant une latitude de configurations très vaste.

La suppression du retournement est rendue possible par l'utilisation de mélanges à haut module dans la zone d'interface en contact direct avec la structure de renfort de type carcasse dans la zone d'ancrage. Dans le pneumatique classique, les carcasses sont en contact intime avec des mélanges de bas ou très bas module. Cela implique des longueurs importantes pour transmettre les efforts à la tringle.

Selon un mode de fabrication particulièrement avantageux où les différents constituants du pneumatique sont disposés directement sur un noyau central dont la forme confère au pneumatique en cours de fabrication une forme sensiblement similaire à la forme du produit fini, la suppression du retournement (qui existe avec une architecture traditionnelle) permet une simplification avantageuse de la fabrication.

De manière préférentielle, au moins un rebord externe d'un bourrelet est agencé de façon à se prolonger sensiblement axialement et radialement vers l'extérieur depuis l'extrémité axialement extérieure du siège du bourrelet. Par exemple, le rebord externe, axialement extérieur au siège, comporte une génératrice sensiblement rectiligne inclinée radialement extérieurement par rapport à l'axe de rotation du pneumatique d'un angle compris entre 30° et 85°, mesuré depuis cet axe.

Un tel rebord est normalement utilisé de paire avec une jante comportant un rebord de jante, couramment désigné "side", également agencé de façon à se prolonger sensiblement axialement et radialement vers l'extérieur depuis l'extrémité axialement extérieure du siège de la jante. Ce rebord est susceptible de servir de zone d'appui lorsque le bourrelet subi un effort tendant à le repousser radialement vers l'extérieur. Ceci peut être le cas par exemple lorsque le phénomène de rotation du bourrelet intervient ou encore sous l'influence de l'effort induit lors d'un virage prononcé. Le rebord contribue au bon maintien du bourrelet et donc du pneumatique sur la jante, notamment en évitant tout débordement axialement vers l'extérieur.

Selon une forme d'exécution avantageuse de l'invention, les bases des piles (les fils radialement les plus près de l'axe de rotation du pneumatique) sont disposées radialement plus à l'extérieur que l'extrémité dudit rebord (portion axialement et radialement la plus à l'extérieur dudit rebord). Les bases des piles sont avantageusement prévues de façon à être disposées radialement extérieurement par rapport au rebord de la jante adaptée au pneumatique. Les opérations de montage/démontage sont alors facilitées.

De manière avantageuse, la structure de renfort de type carcasse s'étend sensiblement radialement depuis chacun des bourrelets, le long des flancs, vers la zone sommet. Ladite structure peut ainsi être unitaire et s'étendre d'un bourrelet à l'autre, ou encore être partagée en deux demi-structures, s'étendant chacune le long d'un seul flanc.

Selon une variante avantageuse ledit arrangement sensiblement radial de fils circonférentiels est disposé en au moins une pile, la totalité des piles étant disposée du côté axialement externe par rapport à la structure de type carcasse.

Selon une autre variante avantageuse, ledit arrangement sensiblement radial de fils circonférentiels est disposé en au moins une pile, la totalité des piles étant disposée du côté axialement interne par rapport à la structure de type carcasse.

Selon une autre variante avantageuse, ledit arrangement sensiblement radial de fils circonférentiels est disposé en au moins deux piles, les piles étant disposées de part et d'autre par rapport à la structure de type carcasse.

Le nombre de piles ainsi que le nombre d'enroulements ou de spires de chacune des piles est avantageusement établi en fonction des caractéristiques recherchées pour le pneumatique, par exemple sa pression de service. Par exemple, un nombre de piles plus élevé peut être souhaité afin d'augmenter la rigidité au niveau de la zone du bourrelet.

La structure de type carcasse est de préférence constituée d'un enroulement filaire faisant des aller-retours entre les deux bourrelets en formant dans chacun des bourrelets des boucles. Par ailleurs, l'enroulement filaire est préférablement constitué d'un seul fil.

Selon une variante avantageuse, la structure de type carcasse forme un prolongement vers l'axe de rotation du pneumatique au-delà de la base desdites piles. Dans un tel cas, puisque le retournement de la structure de type carcasse n'est pas indispensable à des fins d'ancrage, le retournement peut être réalisé sans le jumelage avec des fils circonférentiels longeant la structure, et/ou sans que la portion retournée soit entièrement ou partiellement disposée dans une zone de mélange caoutchoutique à haut module.

Selon une autre variante avantageuse, le bourrelet intérieur prévu pour être disposé du côté interne de la roue et le bourrelet extérieur prévu pour être installé sur le côté externe de la roue, sont agencés de façon asymétrique. Ainsi par exemple, le nombre de piles ou le nombre de spires de chacune des piles peut être différent. Quelques exemples d'agencements asymétriques sont illustrés dans les figures, où par exemple le nombre de piles de fils dans le bourrelet côté intérieur est différent du nombre de piles de fils dans le bourrelet côté extérieur. Par exemple, le nombre de piles de fils dans le bourrelet côté intérieur est inférieur au nombre de piles de fils dans le bourrelet côté extérieur. L'inverse est également possible, en fonction des caractéristiques recherchées.

Selon un autre aspect, la symétrie concerne les agencements des zones d'ancrage, intermédiaire et d'appui. Chacun des bourrelets peut présenter des architectures différentes où par exemple, les formes, les dispositions, les dimensions d'une ou plusieurs des zones peuvent varier. On peut aussi faire varier les matériaux constituants, les caractéristiques mécaniques, comme par exemple la dureté, tout comme on peut faire varier le nombre de zones.

L'invention propose par ailleurs un pneumatique pour roue de véhicule selon la revendication 14.

D'autres caractéristiques et avantages de l'invention apparaîtront à la lecture des exemples de réalisation du pneumatique conforme à l'invention, donnés à titre non limitatif et en se référant aux figures 1 à 10 annexées, dans lesquelles:
la figure 1 illustre, en coupe transversale, un pneumatique selon l'invention;
la figure 2 illustre, en coupe transversale agrandie, les bourrelets d'une première variante d'un pneumatique selon l'invention, où les piles de fils sont disposées d'un seul et même côté de la structure de renfort, soit dans cet exemple la portion axialement externe et où les trois zones du bourrelet sont jumelées;
la figure 3 illustre, en coupe transversale agrandie, une autre variante de bourrelets, où les différentes zones du bourrelet sont agencées de façon avantageuse (les fils circonférentiels ne sont pas illustrés sur cette figure);
la figure 4 illustre, en coupe transversale agrandie, une autre variante de bourrelets, où les différentes zones du bourrelet sont agencées de façon avantageuse (les fils circonférentiels ne sont pas illustrés sur cette figure);
la figure 5 illustre, en coupe transversale agrandie, une autre variante de bourrelets, où les différentes zones du bourrelet sont agencées de façon avantageuse;
la figure 6 illustre, en coupe transversale agrandie, une autre variante de bourrelets, où les différentes zones du bourrelet sont agencées de façon avantageuse;
la figure 7 présente deux courbes illustrant la rotation de la zone basse du pneumatique en fonction de la pression de gonflage;
les figures 8a à 8e illustrent l'évolution de la position d'un bourrelet selon l'invention sur la jante prévue pour réaliser l'assemblage, en fonction de la pression de gonflage;
la figure 9 illustre, en coupe transversale agrandie, une autre variante de bourrelets, où les différentes zones du bourrelet sont agencées de façon avantageuse;
la figure 10a illustre, en coupe transversale, un pneumatique selon l'invention, monté sur une jante de type adapté;
la figure 10b illustre, en coupe transversale agrandie, le pneumatique de la figure 10a monté sur une jante de type adapté.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc.

D'autre part, on entend par structure radiale, un agencement à 90 degrés, mais aussi, selon l'usage, à un angle proche de 90°.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par "gomme de liaison" le mélange caoutchoutique éventuellement en contact avec les fils de renforcement, adhérant à ceux-ci et susceptible de remplir les interstices entre fils adjacents.

On entend par "contact" entre un fil et une couche de gomme de liaison le fait qu'au moins une partie de la circonférence extérieure du fil est en contact intime avec le mélange caoutchoutique constituant de la gomme de liaison.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

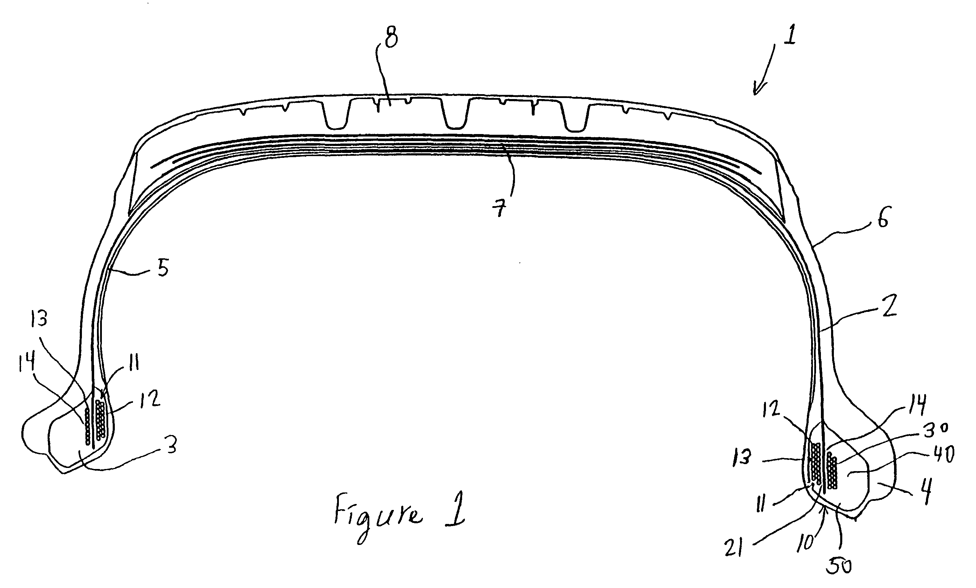

La figure 1 illustre, en coupe transversale, un pneumatique 1 selon l'invention. Ce pneumatique comprend un premier flanc 5 adjacent à un premier bourrelet 3 correspondant de préférence au bourrelet intérieur. De façon similaire, la portion opposée du pneumatique comprend un second flanc 6 adjacent à un second bourrelet 4. Un sommet 7, sur lequel est prévue une bande de roulement 8, assure la jonction entre les flancs. Le sommet comporte de préférence au moins une ceinture de renfort.

Le pneumatique comporte une structure de renfort 2, comme par exemple une carcasse, pourvue de renforts avantageusement configurés selon un agencement sensiblement radial. Cette structure peut être agencée de façon continue d'un bourrelet à l'autre, en passant par les flancs et le sommet, ou encore, elle peut comporter deux ou plusieurs parties, agencées par exemple le long des flancs, sans couvrir la totalité du sommet.

Les portions d'extrémité de la structure de renfort 2 coopèrent avec les bourrelets. Il se crée ainsi un ancrage de ces portions dans les dits bourrelets de manière à assurer l'intégrité du pneumatique.

La structure de renfort 2 peut être réalisée par enroulement d'un seul fil faisant des aller-retours entre les deux bourrelets en formant dans chacun des bourrelets des boucles. Ces boucles, enrobées dans le mélange de gomme à haut module, contribuent à la liaison mécanique entre la structure de renfort 2 et le bourrelet, notamment les piles 13. Par la présence de boucles entre le parcours "aller" et le "retour" du fil, on voit que le renforcement est de type monofilament. Bien entendu, la carcasse pourrait ne pas être fabriquée de façon continue à partir d'un seul fil, et il pourrait ne pas y avoir de boucles, mais par exemple des extrémités coupées.

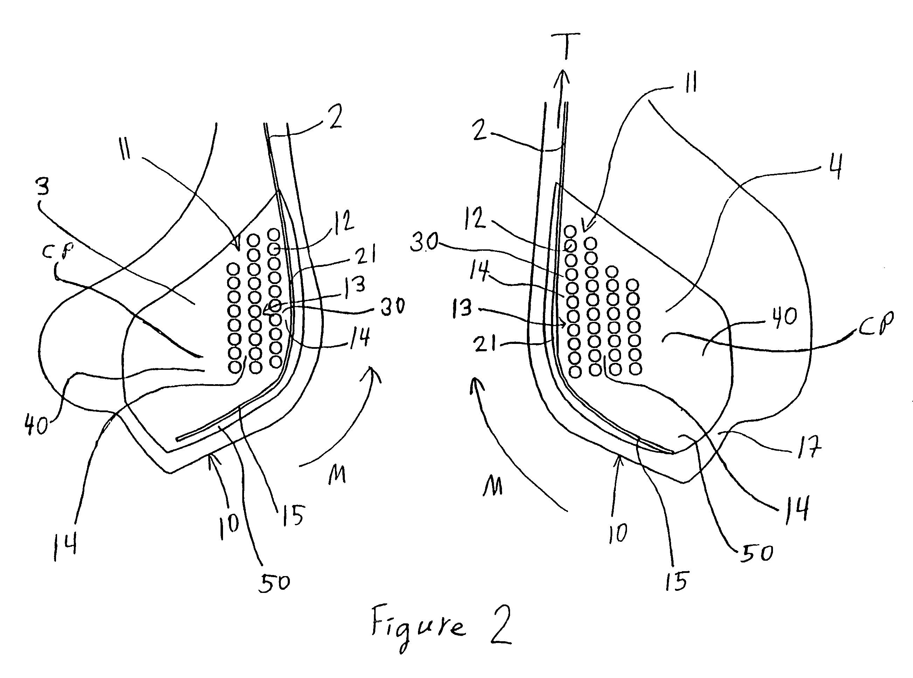

Tel qu'illustré à la figure 2, des fils circonférentiels 12 agencés de préférence sous forme de piles 13, forment un arrangement de fils 11, prévu dans chacun des bourrelets 3 et 4. Ces fils sont de préférence métalliques. Une partie ou la totalité des fils peut également être réalisée en matériaux textiles ou autres.

Au moins un fil 12 d'une des piles 13 est de préférence disposé à proximité immédiate d'une portion d'extrémité 21 de la structure de renfort 2. Les piles peuvent également être agencées de façon à ce qu'une portion d'extrémité 21 soit intercalée entre des piles 13.

L'espace entre les fils 12 et la structure de renfort 2 est occupé par un mélange de gomme de liaison 14. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange de gomme à haut module d'élasticité dans la zone d'intersection entre l'arrangement de fils 11 et la structure de renfort 2. A titre d'exemple non limitatif, le module d'élasticité d'une telle gomme peut atteindre et même dépasser 40 Mpa.

Les arrangements de fils 11 peuvent être agencés et fabriqués différemment. Par exemple, une pile 13 peut avantageusement être constituée d'un seul fil 12, enroulé (sensiblement à zéro degrés) en spirale, de préférence depuis le plus petit diamètre vers le plus grand diamètre. Une pile peut également être constituée de plusieurs fils concentriques posés l'un dans l'autre.

La position des piles peut varier selon une quasi-infinité de possibilités. Quelques exemples non limitatifs sont illustrés et décrits dans la présente description. La base des piles (portion radialement intérieure) peut être sensiblement co-radiale (alignée radialement), tel qu'illustré à la figure 2, ou être décalée par exemple de façon à ce que l'ensemble des premiers fils de chaque pile forme un alignement présentant un angle donné par rapport à l'axe de rotation du pneumatique.

De façon surprenante, il a été constaté que l'ancrage de la structure de renfort dans le bourrelet peut être réalisé par le type d'interface décrite, malgré le fait que dans le pneumatique à mobilité étendue selon l'invention, les forces induites au niveau du bourrelet diffèrent de celles d'un bourrelet de type classique. Par exemple, avec le pneumatique selon l'invention, une augmentation de pression occasionne une augmentation de la poussée radiale du siège du bourrelet contre le siège de la jante.

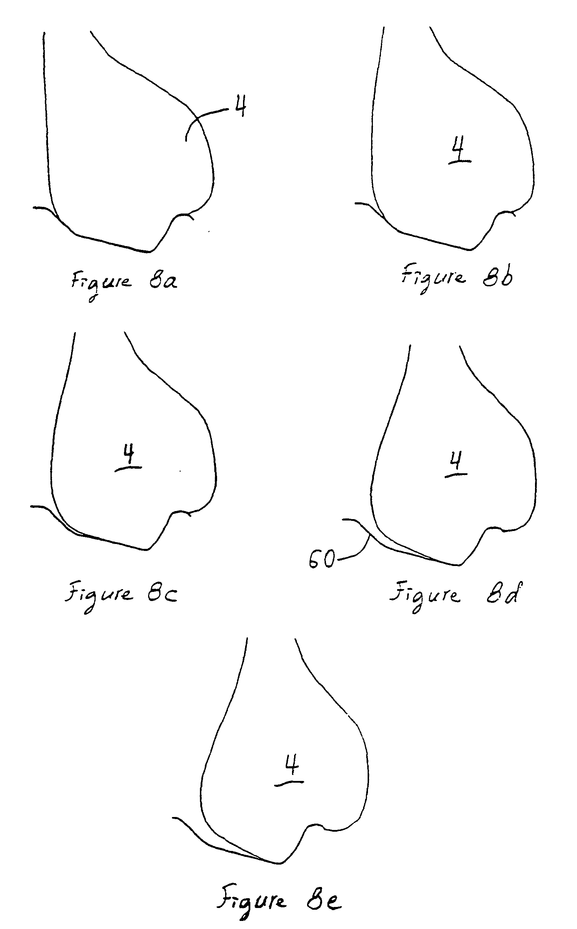

Les figures 8a à 8e illustrent l'évolution de la position angulaire de la zone basse d'un pneumatique et notamment de la zone d'ancrage d'un bourrelet par rapport à sa géométrie initiale non monté et non gonflé. On observe que plus la pression augmente, plus la portion axialement extérieure du siège appuie contre le siège de la jante. La figure 8a illustre l'ensemble non gonflé, à zéro bar. L'angle de positionnement est alors d'environ 10°. La figure 8b illustre l'ensemble gonflé à un bar. L'angle de positionnement est alors d'environ 8°.

La figure 8c illustre l'ensemble gonflé à trois bars. L'angle de positionnement est alors d'environ 3°. La figure 8d illustre l'ensemble gonflé à six bars. L'angle de positionnement est alors d'environ -4°. La figure 8e illustre l'ensemble gonflé à huit bars. L'angle de positionnement est alors d'environ -11°.

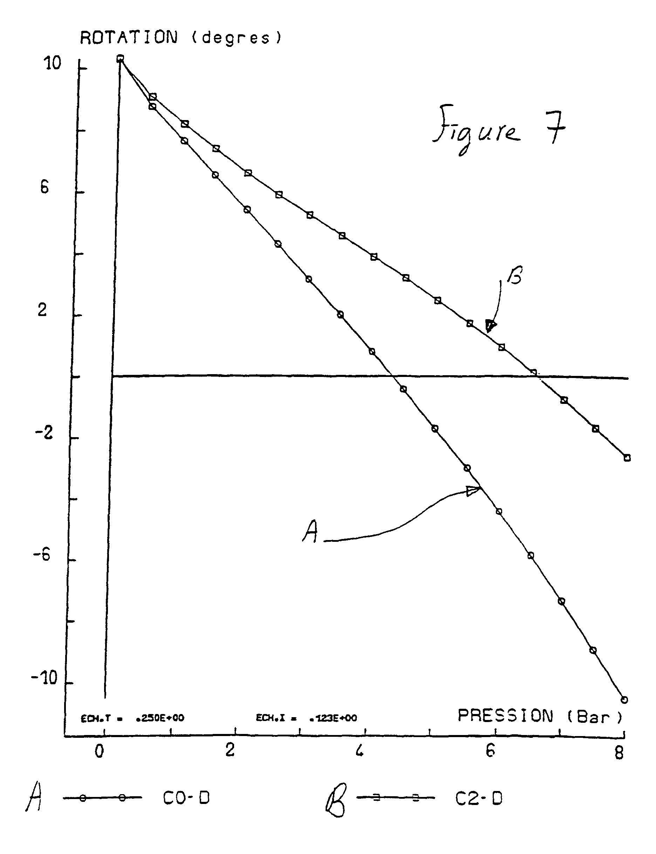

La figure 7 présente deux courbes illustrant la rotation de la zone basse du pneumatique en fonction de la pression de gonflage. La courbe A correspond à une architecture où les deux piles de fils sont disposées axialement extérieurement à la structure de renfort de type carcasse. La courbe B correspond à une architecture où deux des piles de fils sont disposées axialement intérieurement par rapport à la structure de renfort de type carcasse. La courbe A correspond donc à un exemple où la structure de renfort est axialement plus vers l'intérieur que dans l'exemple correspondant à la courbe B. L'effet bras de levier, par exemple par rapport au centre de pression CP, est plus important dans le premier exemple.

On constate par ailleurs que les résultats sur la rotation de la zone basse diffèrent dans ces deux exemples de sorte qu'une architecture où la structure de renfort est axialement plus vers l'intérieur, donc avec un plus grand bras de levier, confère plus de rotation à la zone basse du pneumatique, les autres paramètres tels que les dimensions, constituants, etc., étant bien entendus similaires dans les deux exemples. Ainsi, la courbe B de la figure 7 présente une rotation moins importante que la courbe A, pour une même variation de pression de gonflage.

Ces essais ont permis de constater qu'il est possible de moduler le niveau de rotation de la zone basse du pneumatique en utilisant divers types d'architectures où les positions relatives des fils et/ou de la structure de renfort varient les unes par rapport aux autres ou encore par rapport à un point donné du bourrelet comme par exemple le centre de pression CP.

En faisant la corrélation entre le graphique de la figure 7 et les diverses positions illustrées à la figure 8, on constate qu'à pression nulle ou faible la pression est surtout concentrée sur la portion axialement interne du siège; plus la pression augmente à l'intérieur du pneumatique, plus les efforts exercés sur cette portion axialement à l'intérieur du siège diminuent et se déplacent vers une zone axialement plus à l'extérieur du bourrelet. A partir d'une certaine valeur de la pression du pneumatique, les efforts exercés dans les deux zones s'équivalent, puis les efforts exercés dans la zone axialement à l'extérieur peuvent devenir plus importants que ceux exercés axialement à l'intérieur.

Pendant ce transfert, il est possible que la pression exercée contre le rebord externe de jante augmente également.

Différents essais effectués avec différentes configurations ont permis de mettre en évidence le fait que ce phénomène de transfert des efforts, ou encore rotation de la zone basse, est dû d'une part à l'augmentation de la pression dans le pneumatique qui crée une force agissant axialement vers l'extérieur et agissant contre le flanc et le bourrelet, et d'autre part par l'augmentation de la tension dans la structure de renfort consécutive à l'augmentation de la pression dans le pneumatique.

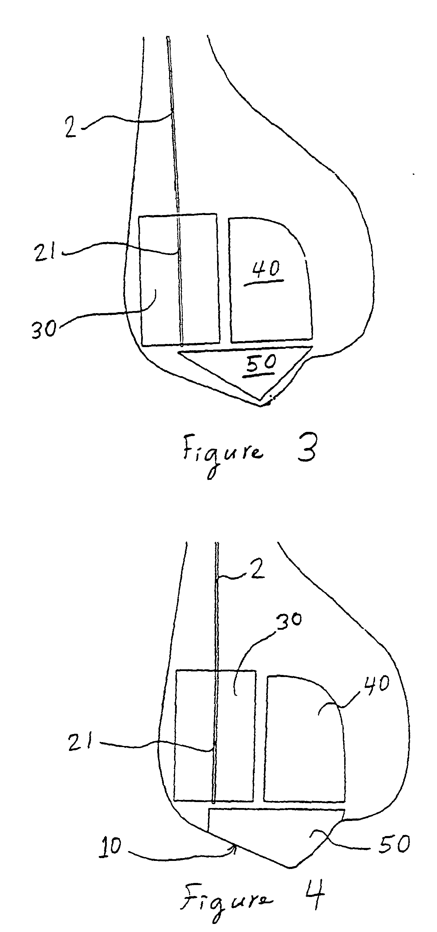

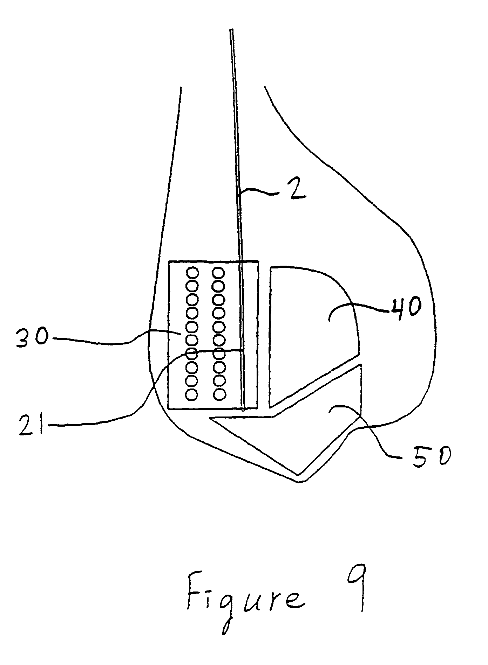

Les figures 3 à 6, de même que la figure 9, illustrent différents exemples d'agencements des zones du bourrelet. Une zone d'ancrage 30, habituellement disposée axialement intérieurement, coopère avec la portion d'extrémité 21 de la structure de renfort 2, de façon à arrimer celle-ci au bourrelet. Un mélange caoutchoutique à haut module contribue à créer cet ancrage. Sous cette zone, ou plus particulièrement dans la portion radialement interne du bourrelet, dans la zone du siège, une zone d'appui 50 est prévue. Cette zone agit en tant qu'interface entre le reste du bourrelet et le siège de la jante. D'importants efforts de type radial et axial sont donc transmis par cette zone. Un mélange caoutchouteux à haut module contribue au transfert de ces efforts en assurant un bon maintien du bourrelet contre la jante.

Entre ces deux premières zones, une zone intermédiaire 40 est prévue, de façon à assurer une continuité mécanique. Les efforts peuvent ainsi être transmis de la zone d'ancrage 30 vers la zone d'appui 50, via la zone intermédiaire 40.

La figure 3 présente une disposition des trois zones telle que les zones 30 et 40 sont sensiblement radialement côte à côte, la zone 50 étant disposée radialement à l'intérieur des deux autres zones. La zone 50 est séparée des deux autres zones par un espace inter-zones sensiblement axial et rectiligne. Un espace inter-zone est présent entre chacune des trois zones. Selon diverses variantes non illustrées, les zones sont jointes deux à deux, par exemple la zone 30 est jumelée avec la 40, la zone 40 est jumelée avec la 50, etc. De telles zones ne sont alors plus séparées comme dans l'exemple de la figure 3.

Les trois zones peuvent également être jointes, pour former un ensemble unifié tel qu'illustré par exemple à la figure 2.

Les espaces inter-zones sont avantageusement occupés par un mélange caoutchouteux d'un module inférieur à celui des mélanges constituant lesdites zones.

La figure 4 illustre un exemple similaire à celui de la figure 3, sauf que la zone 50 s'étend radialement intérieurement jusqu'au bord du bourrelet ou jusqu'au siège. Il est à noter que les fils circonférentiels 12 de la zone d'ancrage 30 ne sont pas représentés aux figures 3 et 4, pour mieux mettre en évidence les zones en tant que tel.

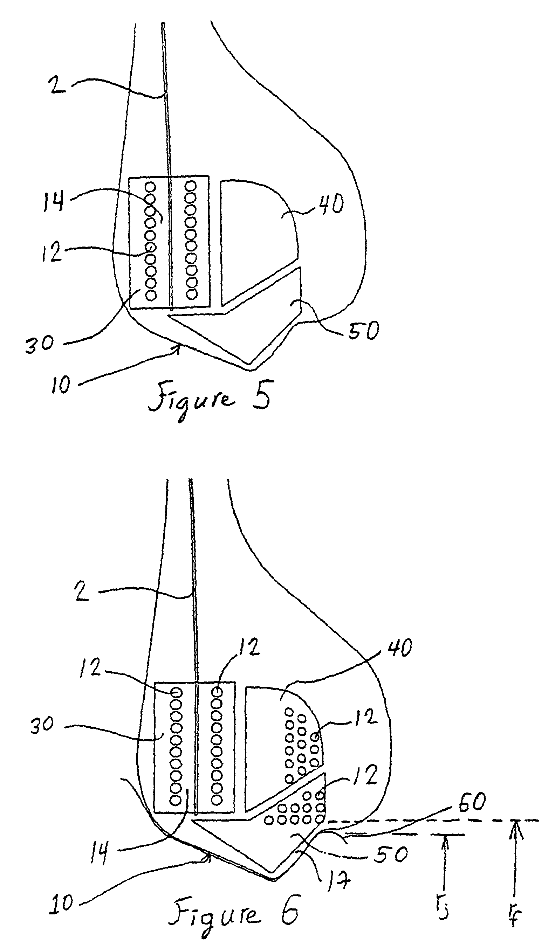

La figure 5 illustre un autre exemple similaire à celui de la figure 3, sauf que la zone 50 s'étend radialement et axialement extérieurement de façon à former avec les deux autres zones une interface en forme de V.

La figure 6 illustre un exemple similaire à celui de la figure 3, comprenant également des alignements ou piles de fils 12 dans la zone intermédiaire 40 et/ou dans la zone d'appui 50. Ces fils servent surtout au serrage du bourrelet sur la jante. Il peut s'agir de fils de type métallique, hybride ou textile.

Le pneumatique selon l'invention est particulièrement adapté pour être utilisé sur une jante du type de celle décrite dans le document EP 0 673 324. Une telle jante comporte un siège et de préférence un rehaussement ou rebord situé axialement et radialement vers l'extérieur. La qualité du contact ou de l'appui du bourrelet sur le siège est particulièrement importante. Un des moyens selon l'invention utilisés pour l'améliorer consiste à optimiser le phénomène préalablement décrit de rotation de la zone basse du bourrelet.

Ce phénomène découle de la structure du bourrelet utilisé. La position axiale de la structure de renfort 2 par rapport au centre de poussée CP du bourrelet peut, dans une certaine mesure, influencer le moment M créé par une force de tension T induite dans la structure de renfort. Ce moment M agit sur l'effet de rotation de la zone basse du bourrelet.

Grâce au phénomène de rotation de la zone basse du bourrelet, ces derniers, notamment au niveau des sièges, appuient davantage sur la face d'appui correspondante des jantes, ce qui permet d'augmenter la cohésion au niveau de l'interface jante/pneumatique. Cet aspect est particulièrement important, par exemple lorsqu'un véhicule effectue des virages serrés ou encore des virages à haute vitesse. Ces caractéristiques contribuent donc à améliorer la sécurité de l'ensemble pneumatique/jante et donc du véhicule.

Entre autres, le choix de l'une ou l'autre des variantes illustrées aux différentes figures permet d'influencer le phénomène de rotation de la zone basse des bourrelets.

Ces figures illustrent quelques exemples d'agencement de la structure de renfort 2 par rapport aux piles 13 de fils. Ainsi, à la figure 2, les piles de fils sont disposées d'un seul et même côté de la structure de renfort 2, dans cet exemple la portion axialement externe.

La figure 5 présente une variante où la structure de renfort 2 est intercalée entre une pile 13 de fils 12 disposée axialement à l'intérieur et une pile 13 de fils 12 disposée axialement à l'extérieur par rapport à ladite structure 2.

La figure 9 présente une autre variante où les piles de fils sont disposées d'un seul et même côté de la structure de renfort 2, dans cet exemple la portion axialement interne.

Ces exemples dont donnés uniquement à titre illustratif: d'autres variantes avec par exemple plus ou moins de piles comportant éventuellement des nombres différents de fils peuvent être utilisés.

Ces différentes variantes d'exécution procurent différents effets mécaniques au niveau des bourrelets, de l'ancrage de la structure de renfort et par conséquent, au niveau de l'interface jante/pneumatique. Ainsi, avec une variante du type de celle montrée à la figure 2, le bras de levier entre la structure 2 et le centre de poussée est grand, procurant un moment M important. A l'inverse, dans une variante du type de celle montrée à la figure 9, le bras de levier est plutôt court, ce qui limite la valeur du moment M. Celui-ci aura donc une valeur plus faible dans le second cas que dans le premier.

La géométrie ou l'agencement de la gomme de liaison 14 peut également influencer le phénomène de rotation de la zone basse. Les figures 2 et 6 illustrent ce fait. Etant donné la présence probable d'une saillie ou rebord sur la jante, susceptible d'appuyer contre la zone extérieure d'appui du bourrelet, la rotation de la zone basse entraînera une force de réaction R provenant de ce rebord. Pour faciliter la rotation ou permettre que celle-ci soit plus importante, il est préférable de limiter cette force de réaction R. Pour ce faire, on prévoit sur le bourrelet une zone tampon entre la zone de mélange à haut module et le rebord de la jante.

Cette zone d'écrasement 17 est constituée d'un matériau plus souple que celui étant généralement situé dans la zone d'interface entre l'arrangement 11 de fils et la structure de renfort 2. Tel que décrit préalablement, sous l'effet combiné de la pression du pneumatique et d'une tension T agissant sur la structure 2, le moment M ainsi créé agit de façon à écraser la zone 17, favorisant de ce fait la rotation de la zone basse du bourrelet.

Cette zone d'écrasement 17 se situe de préférence le long du profil axial extérieur du bourrelet prévu pour être disposé adjacent au rebord de jante. Par exemple, la zone 17 peut se situer, telle qu'illustrée à la figure 6, entre la portion radialement extérieure sensiblement adjacente à la pointe radialement inférieure du bourrelet en se prolongeant axialement et radialement vers l'extérieur, de façon à constituer le contour externe de la portion du bourrelet susceptible de longer le rebord de jante.

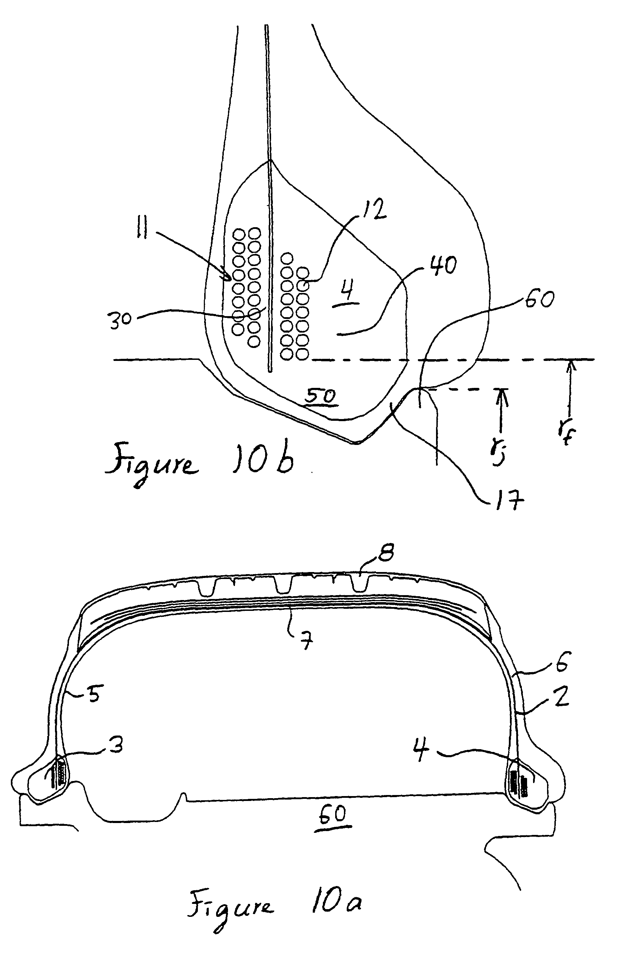

Les bases des piles (les fils radialement les plus près de l'axe de rotation du pneumatique) sont de préférence disposées radialement plus à l'extérieur que l'extrémité dudit rebord (portion axialement et radialement la plus à l'extérieur dudit rebord) tel qu'illustré par exemple à la figure 6 et aux figures 10a et 10b. Les bases des piles sont avantageusement prévues de façon à être disposées radialement extérieurement par rapport au rebord de la jante 60 adaptée au pneumatique. Les opérations de montage/démontage sont alors facilitées. Ainsi, à la figure 6 et à la figure 10b, on constate que r_{f} (rayon des premiers fils) est supérieur à rⱼ (rayon du rebord ou crochet de jante). Ce rayon correspond à la distance depuis l'axe de rotation.

Le module d'élasticité du mélange utilisé dans cette zone peut être compris par exemple entre 10 et 40 Mpa, mais de préférence inférieur à 20 Mpa. On entend par "module d'élasticité" d'un mélange caoutchoutique, un module d'extension sécant obtenu à une déformation d'extension uniaxiale de l'ordre de 10% à température ambiante.

La zone d'interface entre la structure de renfort 2 et l'arrangement de fils 11 peut être prévue de manière à ce que la structure de renfort 2 s'interpose entre ou près des piles 13, avec la portion d'extrémité 21 de la structure 2 se trouvant dans une position radiale donnée quelque part le long d'une des piles, ou encore près de la base d'une pile, mais sans dépasser significativement la base des piles dans la direction de l'axe de rotation du pneumatique.

Autrement, selon un autre aspect de l'invention, la portion d'extrémité 21 se trouve radialement plus près de l'axe de rotation du pneumatique que la base des piles 13, créant ainsi un prolongement 15 de la structure de renfort 2 au-delà de la base des piles 13. La figure 2 illustre un exemple d'un tel prolongement 15. Le prolongement 15 peut alors prendre une multiplicité d'agencements, comme par exemple un alignement sensiblement parallèle au siège 10, un alignement sensiblement parallèle à l'axe de rotation du pneumatique, etc.

Selon une autre variante, la portion d'extrémité 21 forme un retournement autour de la pile ou vers la pile axialement extérieure ou encore entre deux piles de préférence autres que celles par lesquelles la structure 2 entre dans le bourrelet.

La longueur du prolongement 15 peut varier entre quelques millimètres jusqu'à plusieurs centimètres.

Les figures 1 et 2 illustrent un autre aspect de l'invention, selon lequel les piles 13 de fils 12 sont agencées, dans les deux bourrelets, de façon asymétrique. Ce type d'agencement est particulièrement avantageux pour un pneumatique comportant des bourrelets non identiques, soit en raison de leurs formes, leurs profils, leurs dimensions, leurs matériaux constituants, leur écart moyen par rapport à l'axe de rotation du pneumatique, etc.

Le document EP 0 673 324 illustre un exemple d'un tel pneumatique. En effet, étant utilisé sur une jante comportant un profil non symétrique et le profil des bourrelets étant adapté à ce profil, ce dernier est asymétrique.

Par ailleurs, en raison de la position du pneumatique sur un véhicule, les deux bourrelets n'ont pas à subir les mêmes niveaux de forces et de contraintes. Souvent, le bourrelet du côté extérieur du pneumatique est le plus sollicité. Il est donc préférable d'optimiser son agencement afin qu'il puisse supporter des niveaux élevés de contraintes. Puisque le bourrelet radialement à l'intérieur 3 n'a en général pas à subir de niveaux de contraintes aussi élevés, sa structure peut être simplifiée.

Dans l'exemple de réalisation illustré à la figure 1, le premier bourrelet 3 comporte trois piles 13 de fils, tandis que le second bourrelet 4 en comporte quatre. La réalisation du premier bourrelet nécessite donc moins de matériaux et moins d'étapes de fabrication. Ce type d'architecture est donc plus économique.

Pour tenir compte d'un maximum de contraintes physiques et mécaniques, non seulement le nombre de piles de fils, mais également le nombre de fils par pile, l'agencement des types de gommes entre elles, la forme du bourrelet, le nombre de zones (ancrage, intermédiaire, appui), leurs formes, leurs dimensions, la nature ou le matériau des fils, etc, peuvent varier d'un bourrelet à l'autre.

Non seulement peut-on ainsi contribuer à réduire les coûts du produit fini, mais on peut également optimiser les structures de chacun des bourrelets 3 et 4 en fonction de leurs spécificités respectives, ce qui n'est pas possible sur un profil symétrique. Dans ce dernier cas, l'agencement unique appliqué aux deux bourrelets constitue la plupart du temps un compromis prenant en considération, dans la mesure du possible, les propriétés parfois contradictoires recherchées pour chacun des bourrelets.

Les différents exemples de réalisations décrites et/ou illustrées peuvent avantageusement être réalisées avec des dispositifs du type de ceux décrits dans le document EP 0 580 055.

Ainsi par exemple, il est très avantageux de confectionner le pneumatique sur un noyau central imposant la forme de sa cavité intérieure. On applique sur ce noyau, de préférence dans l'ordre requis par l'architecture finale, tous les constituants du pneumatique, qui sont disposés directement à leur place finale, selon un profil sensiblement final. Dans ce cas, un tel pneumatique peut être moulé et vulcanisé comme exposé dans le document US 4 895 692.

## Revendications

1. Pneumatique pour roue de véhicule, comprenant:
- deux flancs (5, 6) espacés axialement l'un de l'autre, réunis à leurs portions radialement extérieures par une zone de sommet (7) pourvue sur sa portion radialement extérieure d'une bande de roulement circonférentielle ;
- des bourrelets (3, 4), disposés radialement intérieurement à chacun des flancs, chaque bourrelet comportant un siège et un rebord externe destinés à venir en contact avec une jante adaptée ;
- une structure de renfort (2) s'étendant sensiblement radialement depuis chacun des bourrelets, le long des flancs, vers la zone sommet ;
- au moins un desdits bourrelets comprenant :
- un siège de bourrelet comportant une génératrice dont l'extrémité axialement intérieure est sur un cercle de diamètre supérieur au diamètre du cercle sur lequel se trouve l'extrémité axialement extérieure ;
**caracterisé en ce que** le au moins un desdits bourrelets comprend aussi:
- une zone d'ancrage (30) de la structure de renfort dans ledit bourrelet, comprenant un arrangement sensiblement radial de fils circonférentiels (11) disposé de façon sensiblement adjacente à une portion de la structure de renfort et comprenant au moins deux piles (13) réparties de part et d'autre de la structure de renfort, un mélange de liaison (14) étant disposé entre les fils circonférentiels et la structure de renfort ;
- une zone intermédiaire (40), disposée sensiblement axialement extérieurement à la zone d'ancrage et comportant au moins une portion sensiblement alignée radialement avec la zone d'ancrage ;
- une zone d'appui (50) dudit bourrelet susceptible de reposer directement ou indirectement contre le siège de jante adapté, et comprenant au moins une portion axialement alignée avec la zone intermédiaire et radialement intérieure à cette zone.

2. Pneumatique pour roue de véhicule selon la revendication 1, dans lequel la zone intermédiaire (40) coopère d'une part avec la zone d'ancrage (30) et d'autre part avec la zone d'appui (50) de façon à assurer une connexion mécanique entre ces deux zones.

3. Pneumatique selon la revendication 2, dans lequel la zone intermédiaire (40) permet le transfert d'efforts de la zone d'ancrage (30) vers la zone d'appui (50) du bourrelet.

4. Pneumatique pour roue de véhicule selon la revendication 3, dans lequel le transfert d'efforts s'effectue par un moment de force.

5. Pneumatique pour roue de véhicule selon l'une des revendications précédentes, dans lequel ladite zone d'appui (50) s'étend sensiblement axialement le long du siège du bourrelet.

6. Pneumatique pour roue de véhicule selon l'une des revendications précédentes, dans lequel ladite zone d'appui (50) est sensiblement adjacente au siège de jante.

7. Pneumatique pour roue de véhicule selon l'une des revendications précédentes, dans lequel ladite zone d'appui (50) est sensiblement constituée d'un mélange de gomme à haut module.

8. Pneumatique pour roue de véhicule selon l'une des revendications précédentes, dans lequel ladite zone intermédiaire (40) est sensiblement constituée d'un mélange de gomme à haut module.

9. Pneumatique pour roue de véhicule selon l'une des revendications précédentes, dans lequel ledit bourrelet comporte également une zone tampon (17) écrasable disposée dans la portion radialement interne et axialement externe, susceptible d'appuyer contre un rebord de la jante.

10. Pneumatique pour roue de véhicule selon l'une des revendications précédentes, dans lequel les portions de bourrelet généralement autour desdites zones d'ancrage, intermédiaire et d'appui sont généralement occupées par un matériau dont le module d'élasticité est plus faible que celui du matériau desdites zones d'ancrage, intermédiaire et d'appui.

11. Pneumatique pour roue de véhicule selon l'une des revendications 7 ou 8, dans lequel le module d'élasticité dudit mélange de gomme de haut module est supérieur à 20 Mpa et de préférence supérieur à 40 Mpa.

12. Pneumatique pour roue de véhicule selon l'une des revendications précédentes, dans lequel la limite axialement extérieure desdites zones correspond sensiblement à la limite extérieure de la jante sur laquelle le pneumatique est susceptible d'être monté.

13. Pneumatique pour roue de véhicule selon l'une des revendications précédentes, dans lequel la zone intermédiaire comporte un arrangement sensiblement radial de fils circonférentiels.

14. Pneumatique pour roue de véhicule, comprenant:
- deux flancs (5, 6) espacés axialement l'un de l'autre, réunis à leurs portions radialement extérieures par une zone de sommet (7) pourvue sur sa portion radialement extérieure d'une bande de roulement (8) circonférentielle ;
- des bourrelets (3, 4), disposés radialement intérieurement à chacun des flancs, chaque bourrelet comportant un siège et un rebord externe destinés à venir en contact avec une jante adaptée ;
- une structure de renfort (2) s'étendant sensiblement radialement depuis chacun des bourrelets, le long des flancs, vers la zone sommet ;
- au moins un desdits bourrelets comprenant :
- un siège de bourrelet comportant une génératrice dont l'extrémité axialement intérieure est sur un cercle de diamètre supérieur au diamètre du cercle sur lequel se trouve l'extrémité axialement extérieure ;
**caracterisé en ce que** le au moins un desdits bourrelets comprend aussi :
- une zone d'ancrage (30) de la structure de renfort dans ledit bourrelet, comprenant un arrangement sensiblement radial de fils circonférentiels (11) disposé de façon sensiblement adjacente à une portion de la structure de renfort, un mélange de liaison (14) étant disposé entre les fils circonférentiels et la structure de renfort, ladite structure de renfort ne se prolongeant pas axialement extérieurement au delà de ladite zone d'ancrage ;
- une zone intermédiaire (40), disposée sensiblement axialement extérieurement à la zone d'ancrage et comportant au moins une portion sensiblement alignée radialement avec la zone d'ancrage ;
- une zone d'appui (50) dudit bourrelet susceptible de reposer directement ou indirectement contre le siège de jante adapté, et comprenant au moins une portion axialement alignée avec la zone intermédiaire et radialement intérieure à cette zone.

## Patentansprüche

1. Luftreifen für ein Kraftfahrzeugrad, der aufweist:
- zwei Flanken (5, 6), die axial voneinander beabstandet sind und in ihren radial äußeren Bereichen in einer Scheitelzone (7) zusammenlaufen, die an ihrem radial äußeren Bereich mit einem umlaufenden Laufstreifen versehen ist;
- Wülste (3, 4), die radial innen an jeder Flanke angeordnet sind, wobei jeder Wulst einen Sitz und einen äußeren Rand aufweist, die dazu vorgesehen sind, mit einer geeigneten Felge in Kontakt zu kommen;
- eine Verstärkungsstruktur (2), die sich in etwa radial von jedem Wulst entlang der Flanken zur Scheitelzone erstreckt;
- wobei mindestens ein Wulst aufweist:
- einen Wulstsitz, der eine Erzeugende aufweist, deren axial inneres Ende auf einem Kreis mit einem Durchmesser liegt, der größer ist als der Durchmesser des Kreises, auf dem sich das axial äußere Ende befindet,
**dadurch gekennzeichnet, dass** zumindest dieser eine Wulst ferner aufweist:
- eine Verankerungszone (30) für die Verankerung der Verstärkungsstruktur in dem Wulst, die eine in etwa radiale Anordnung von umlaufenden Drähten (11) aufweist, die in etwa angrenzend an einen Teil der Verstärkungsstruktur angeordnet ist und mindestens zwei, an beiden Seiten der Verstärkungsstruktur angeordnete Stapel (13) umfasst, wobei ein Verbindungsmischung (14) zwischen den umlaufenden Drähten und der Verstärkungsstruktur angeordnet ist;
- eine Zwischenzone (40), die in etwa axial außen an der Verankerungszone angeordnet ist, und mindestens einen in etwa radial mit der Verankerungszone ausgerichteten Bereich aufweist;
- eine Auflagezone (50) des Wulstes, die direkt oder indirekt an dem Sitz der geeigneten Felge anliegen kann und mindestens einen axial mit der Zwischenzone ausgerichteten und radial innen an dieser Zone liegenden Bereich aufweist.

2. Luftreifen für Kraftfahrzeugräder gemäß Anspruch 1, bei dem die Zwischenzone (40) einerseits mit der Verankerungszone (30) und andererseits mit der Auflagezone (50) zusammenwirkt, sodass eine mechanische Verbindung zwischen diesen beiden Zonen gewährleistet ist.

3. Luftreifen nach Anspruch 2, bei dem die Zwischenzone (40) die Übertragung der Kräfte von der Verankerungszone (30) zur Auflagezone (50) des Wulstes ermöglicht.

4. Luftreifen für Kraftfahrzeugräder nach Anspruch 3, bei dem die Übertragung der Kräfte über ein Drehmoment erfolgt.

5. Luftreifen für Kraftfahrzeugräder nach einem der vorhergehenden Ansprüche, wobei sich die Auflagezone (50) im Wesentlichen axial an dem Sitz des Wulstes entlang erstreckt.

6. Luftreifen für Kraftfahrzeugräder nach einem der vorhergehenden Ansprüche, wobei die Auflagezone (50) in etwa an den Sitz der Felge angrenzt.

7. Luftreifen für Kraftfahrzeugräder nach einem der vorhergehenden Ansprüche, wobei die Auflagezone (50) im Wesentlichen aus einer Gummimischung mit hohem Modul besteht.

8. Luftreifen für Kraftfahrzeugräder nach einem der vorhergehenden Ansprüche, wobei die Zwischenzone (40) im Wesentlichen aus einer Gummimischung mit hohem Modul besteht.

9. Luftreifen für Kraftfahrzeugräder nach einem der vorhergehenden Ansprüche, wobei der Wulst auch eine Pufferzone (17) aufweist, die zusammengedrückt werden kann und in dem radial inneren und axial äußeren Bereich angeordnet ist und an einem Rand der Felge anliegen kann.

10. Luftreifen für Kraftfahrzeugräder nach einem der vorhergehenden Ansprüche, bei dem die Bereiche des Wulstes um die Verankerungszone, die Zwischenzone und die Auflagezone im Allgemeinen aus einem Material gebildet sind, dessen Elastizitätsmodul kleiner ist als der Modul des Materials der Verankerungszone, der Zwischenzone und der Auflagezone.

11. Luftreifen für Kraftfahrzeugräder nach einem der Ansprüche 7 oder 8, wobei der Elastizitätsmodul der Gummimischung mit hohem Modul über 20 MPa und vorzugsweise über 40 MPa liegt.

12. Luftreifen für Kraftfahrzeugräder nach einem der vorhergehenden Ansprüche, wobei die axial äußere Grenze dieser Zonen in etwa der äußeren Begrenzung der Felge entspricht, auf die der Luftreifen montiert werden kann.

13. Luftreifen für Kraftfahrzeugräder nach einem der vorhergehenden Ansprüche, bei dem die Zwischenzone eine in etwa radiale Anordnung von umlaufenden Drähten aufweist.

14. Luftreifen für ein Kraftfahrzeugrad, der aufweist:
- zwei Flanken (5, 6), die axial voneinander beabstandet sind und in ihren radial äußeren Bereichen in einer Scheitelzone (7) zusammenlaufen, die an ihrem radial äußeren Bereich mit einem umlaufenden Laufstreifen (8) versehen ist;
- Wülste (3, 4), die radial innen an jeder Flanke angeordnet sind, wobei jeder Wulst einen Sitz und einen äußeren Rand aufweist, die dazu vorgesehen sind, mit einer geeigneten Felge in Kontakt zu kommen;
- eine Verstärkungsstruktur (2), die sich in etwa radial von jedem Wulst entlang der Flanken zur Scheitelzone erstreckt;
- wobei mindestens ein Wulst aufweist:
- einen Wulstsitz, der eine Erzeugende aufweist, deren axial inneres Ende auf einem Kreis mit einem Durchmesser liegt, der größer ist als der Durchmesser des Kreises, auf dem sich das axial äußere Ende befindet,
**dadurch gekennzeichnet, dass** zumindest dieser eine Wulst ferner aufweist:
- eine Verankerungszone (30) zur Verankerung der Verstärkungsstruktur in dem Wulst, die eine in etwa radiale Anordnung von umlaufenden Drähten (11) aufweist, die in etwa angrenzend an einen Teil der Verstärkungsstruktur angeordnet ist, wobei eine Verbindungsmischung (14) zwischen den umlaufenden Drähten und der Verstärkungsstruktur vorgesehen ist und wobei sich die Verstärkungsstruktur axial außen nicht über die Verankerungszone hinaus erstreckt;
- eine Zwischenzone (40), die in etwa axial außen an der Verankerungszone angeordnet ist, und mindestens einen in etwa radial mit der Verankerungszone ausgerichteten Bereich aufweist;
- eine Auflagezone (50) des Wulstes, die direkt oder indirekt an dem Sitz der geeigneten Felge anliegen kann und mindestens einen axial mit der Zwischenzone ausgerichteten und radial innen an dieser Zone liegenden Bereich aufweist.

## Claims

1. A tyre for a vehicle wheel, comprising:
- two sidewalls (5, 6) spaced apart axially from each other, joined at their radially outer portions by a crown zone (7) provided on its radially outer portion with a circumferential tread,
- beads (3, 4), arranged radially to the inside of each of the sidewalls, each bead comprising a seat and an outer flange which are intended to come into contact with a suitable rim;
- a reinforcement structure (2) extending substantially radially from each of the beads, along the sidewalls, towards the crown zone;
- at least one of said beads comprising:
- a bead seat comprising a generatrix the axially inner end of which is located on a circle of diameter greater than the diameter of the circle on which the axially outer end is located;
**characterised in that** the at least one of said beads also comprises:
- an anchoring zone (30) for the reinforcement structure in said bead, comprising a substantially radial arrangement of circumferential cords (11) which is arranged substantially adjacent to a portion of the reinforcement structure, and comprising at least two stacks (13) distributed on either side of the reinforcement structure, a bonding mix (14) being arranged between the circumferential cords and the reinforcement structure;
- an intermediate zone (40), arranged substantially axially externally to the anchoring zone and comprising at least one portion which is substantially aligned radially with the anchoring zone;
- a bearing zone (50) for said bead which is able to lie directly or indirectly against the suitable rim seat, and comprising at least one portion aligned axially with the intermediate zone and radially internally to this zone.

2. A tyre for a vehicle wheel according to Claim 1, in which the intermediate zone (40) cooperates on one hand with the anchoring zone (30) and on the other hand with the bearing zone (50) so as to provide a mechanical connection between these two zones.

3. A tyre according to Claim 2, in which the intermediate zone (40) permits the transfer of forces from the anchoring zone (30) towards the bearing zone (50) of the bead.

4. A tyre for a vehicle wheel according to Claim 3, in which the transfer of forces takes place by a moment of force.

5. A tyre for a vehicle wheel according to one of the preceding claims, in which said bearing zone (50) extends substantially axially along the seat of the bead.

6. A tyre for a vehicle wheel according to one of the preceding claims, in which said bearing zone (50) is substantially adjacent to the rim seat.

7. A tyre for a vehicle wheel according to one of the preceding claims, in which said bearing zone (50) is substantially formed of a rubber mix of high modulus.

8. A tyre for a vehicle wheel according to one of the preceding claims, in which said intermediate zone (40) is substantially formed of a rubber mix of high modulus.

9. A tyre for a vehicle wheel according to one of the preceding claims, in which said bead also comprises a loadable buffer zone (17) which is arranged in the radially inner and axially outer portion, which is capable of bearing against a flange of the rim.

10. A tyre for a vehicle wheel according to one of the preceding claims, in which the bead portions generally around said anchoring, intermediate and bearing zones are generally occupied by a material, the elasticity modulus of which is lower than that of the material of said anchoring, intermediate and bearing zones.

11. A tyre for a vehicle wheel according to one of Claims 7 or 8, in which the elasticity modulus of said rubber mix of high modulus is greater than 20 MPa, and preferably greater than 40 MPa.

12. A tyre for a vehicle wheel according to one of the preceding claims, in which the axially outer limit of said zones corresponds substantially to the outer limit of the rim on which the tyre is likely to be mounted.

13. A tyre for a vehicle wheel according to one of the preceding claims, in which the intermediate zone comprises a substantially radial arrangement of circumferential cords.

14. A tyre for a vehicle wheel, comprising:
- two sidewalls (5, 6) spaced apart axially from each other, joined at their radially outer portions by a crown zone (7) provided on its radially outer portion with a circumferential tread (8);
- beads (3, 4), arranged radially to the inside of each of the sidewalls, each bead comprising a seat and an outer flange which are intended to come into contact with a suitable rim;
- a reinforcement structure (2) extending substantially radially from each of the beads, along the sidewalls, towards the crown zone;
- at least one of said beads comprising:
- a bead seat comprising a generatrix the axially inner end of which is located on a circle of diameter greater than the diameter of the circle on which the axially outer end is located;
**characterised in that** the at least one of said beads also comprises:
- an anchoring zone (30) for the reinforcement structure in said bead, comprising a substantially radial arrangement of circumferential cords (11) which is arranged substantially adjacent to a portion of the reinforcement structure, a bonding mix (14) being arranged between the circumferential cords and the reinforcement structure, said reinforcement structure not being extended axially externally beyond said anchoring zone;
- an intermediate zone (40), arranged substantially axially externally to the anchoring zone and comprising at least one portion which is substantially aligned radially with the anchoring zone;
- a bearing zone (50) for said bead which is able to lie directly or indirectly against the suitable rim seat, and comprising at least one portion aligned axially with the intermediate zone and radially internally to this zone.
